# EUROPÄISCHE PATENTANMELDUNG

(11) **EP 0 972 954 A2**
(43) Veröffentlichungstag der Anmeldung: **19.01.2000**
(21) Anmeldenummer: 99110792.1
(22) Anmeldetag: 04.06.1999
(51) Int. Cl.: F16B 37/04

(54) **Befestigungssystem**

(30) Priorität: 15.07.1998 DE 29812609 U; 01.12.1998 DE 29821471 U
(71) Anmelder: Sick AG, 79183 Waldkirch, Breisgau (DE)
(72) Erfinder: Neuhaeuser, Torsten, 79353 Bahlingen (DE); Rospert, Matthias Dr., 79350 Sexau (DE); Güntert, Jürgen, 79104 Freiburg (DE)
(74) Vertreter: Manitz, Finsterwald & Partner

(57) **Zusammenfassung**

Es wird ein Befestigungssystem zur lösbaren Verankerung von Sensoren in einer Verankerungsnut, die im Bereich des Nuthalses durch zwei Nutschultern begrenzt wird, mit einem durch den Nuthals in die Verankerungsnut einsetzbaren, mit dem Sensor verbundenen Basisteil beschrieben. Das Basisteil weist eine feste Schulte auf, welche bei in die Verankerungsnut eingesetztem Basisteil hinter eine der Nutschultern eingreift. An der der festen Schulter gegenüberliegenden Seite des Basisteils ist mindestens ein von einer Freigabestellung in eine Raststellung verstellbarer Schnapphaken mit einer Federzunge und einer Rastkante vorgesehen, welche in der Raststellung des Schnapphakens bei in die Verankerungsnut eingesetztem Basisteil hinter die andere Nutschulter eingreift. Zur Fixierung des Basisteils in der Verankerungsnut ist eine Klemmschraube vorgesehen, welche das Basisteil in der Verankerungsnut fixiert und dabei eine Bewegung des Schnapphakens von der Raststellung in die Freigabestellung verhindert.

## Beschreibung

Die Erfindung betrifft ein Befestigungssystem für Sensoren, insbesondere für magnetische, induktive oder optische Sensoren, in einer Verankerungsnut.

In der Automatisierungstechnik werden für verschiedene Abläufe Arbeitszylinder, Linearantriebe und dergleichen eingesetzt. Dabei findet ein mechanische Bewegungsvorgang einer Komponente innerhalb eines Gehäuses statt. Um diesen Bewegungsablauf bzw. die jeweilige Position des bewegten Teiles erfassen zu können, werden Sensoren an diesen Gehäusen angebracht. Zu diesem Zweck sind in dem Gehäuse in Bewegungsrichtung, z. B. des Zylinders, durchgehende Verankerungsnuten eingebracht, in welchen dann der Sensor beliebig eingesetzt und fixiert werden kann.

Um derartige Sensoren bei der Montage oder Umrüstung in eine Verankerungsnut einzuschieben und danach definiert zu positionieren, ist es oft zwingend notwendig, daß die Verankerungsnut zumindest an einem Ende stirnseitig offen ist, um den Sensor darin einschieben zu können. Wenn dabei jedoch mehrere Sensoren in der gleichen Verankerungsnut an unterschiedlichen Stellen plaziert sind, und dann bei einer Umrüstung oder Reparatur der Anlage ein Sensor verändert oder herausgenommen werden muß, müssen bei dieser Art der Befestigung all jene Sensoren entfernt werden, damit der Zugang zur stirnseitigen freien Öffnung der Nut vorhanden ist. Die bekannten Lösungen, bei denen der Sensor an beliebiger Stelle seitlich in die Verankerungsnut eingesetzt werden kann, sind entweder mechanisch aufwendig und damit kostenintensiv oder haben Nachteile hinsichtlich der Festigkeit bei der Fixierung.

Eine Aufgabe der vorliegenden Erfindung besteht nun darin, ein kostengünstiges Befestigungssystem mit dem Sensor zu integrieren, welches ermöglicht, den Sensor an beliebiger Stelle in die Verankerungsnut einzuführen, so daß kein freiliegendes Ende der Führungsnut zum Einsetzen des Sensors vorhanden sein muß. Darüber hinaus muß eine gute Verschiebbarkeit des Sensors zur Justage desselben innerhalb der Verankerungsnut vorhanden sein und der Sensor muß im fixierten Zustand eine hohe mechanische Belastungsfähigkeit aufweisen. Die Möglichkeit, den Sensor ohne Zerstörung wieder aus der Halterung entfernen zu können, ist dabei ebenfalls gefordert, wie die Vorgabe, daß an die Genauigkeit der Verankerungsnut keine großen Anforderungen gestellt werden müssen, d. h. die Halterung soll auch bei Verankerungsnuten mit großen Toleranzen einwandfrei arbeiten.

Diese Aufgabe wird erfindungsgemäß durch die Merkmale des Anspruchs 1 gelöst.

Erfindungsgemäß ist vorgesehen, daß das den Sensor tragende Basisteil des Befestigungssystems durch den Nuthals, welcher durch die beiden Nutschultern begrenzt ist, eingesetzt wird. Längs des Basisteils ist einseitig eine durchgehende, feste, d.h. im wesentlichen starre Schulter ausgebildet, welche nach dem Einkippen in die Verankerungsnut unter eine der beiden Nutschultern eingreift. Unter die entgegengesetzte Nutschulter der Verankerungsnut rastet ein am Sensor befindlicher Schnapphaken in einer Snap-in-Funktion ein, so daß das Basisteil und damit der Sensor bereits nach dem Eindrücken in die Verankerungsnut durch die Federkraft des Schnapphakens vorfixiert ist. Die endgültige Fixierung wird danach mittels einer Klemmschraube, die zwischen der festen Schulter und dem Schnapphaken auf den Boden der Verankerungsnut drückt, erzielt.

Aufgrund der erfindungsgemäßen Ausführungsform dieses Schnapphakens ist trotz geringem Platzbedarf ein großer Federweg vorhanden, so daß auf diesem Wege auch große Toleranzen hinsichtlich der Geometrie der Verankerungsnut überwunden werden können. Wenn dieser Sensor nun in die Verankerungsnut eingeschnappt ist, kann er innerhalb der Verankerungsnut in Längsrichtung beliebig verschoben und positioniert werden.

Zur Fixierung des Sensors an einer gewünschten Position ist es vorgesehen, mit einer Klemmschraube, welche sich zwischen dem Schnapphaken und der festen Schulter des Sensors befindet, den Sensor an der gewünschten Stelle zu fixieren. Durch die Klemmschraube, welche sich auf dem Boden der Verankerungsnut abstützt, wird einerseits eine kraftschlüssige Fixierung des Sensors erreicht, andererseits wird dadurch gleichzeitig auch der Federweg des Schnapphakens gesperrt. Da dieses erfindungsgemäße Befestigungssystem, d. h. die feste Schulter und der gegenüberliegende durch eine Klemmschraube verriegelbare Schnapphaken mit in das Sensorgehäuse integrierbar sind, ist eine preiswerte Herstellung des Befestigungssystems möglich, besonders dann, wenn das Sensorgehäuse als gespritztes Kunststoffelement hergestellt wird.

Nach einer vorteilhaften Ausführungsform der Erfindung sind das Basisteil und der Sensor als separate Teile ausgebildet, wobei der Sensor insbesondere lösbar an dem Basisteil befestigt ist. Durch die getrennte Ausbildung von Sensor und Basisteil ist es möglich, einen einmal über das Basisteil in der Verankerungsnut positionierten und fixierten Sensor von dem Basisteil abzunehmen, ohne die Position des Basisteils in der Verankerungsnut zu verändern. Der abgenommene Sensor oder ein Austauschsensor kann anschließend wieder an dem Basisteil befestigt werden, so daß automatisch eine korrekte Positionierung des neuen Sensors erreicht wird. Hierfür müssen die Sensoren lediglich so ausgestaltet sein, daß jeweils der Abstand zwischen dem wirksamen Sensorbereich und dem Befestigungselement des Sensors gleich groß sowie das jeweils zum Befestigen des Sensors an dem Basisteil vorgesehene Befestigungselement in gleicher Weise ausgebildet ist. Eine erneute Positionierung und Justierung des Sensors kann somit erfindungsgemäß vermieden werden.

Nach einer vorteilhaften Ausführungsform der Erfindung sind bei an dem Basisteil befestigtem Sensor die beim Einsetzen zum Boden der Verankerungsnut hin zeigenden Unterseiten des Sensors und des Basisteils im wesentlichen in gleicher Höhe angeordnet. Dadurch ist gewährleistet, daß der Sensor mit seinem wirksamen Bereich möglichst nahe an der Gehäusewand, in der die Verankerungsnut ausgebildet ist, angeordnet ist. Auf diese Weise wird es beispielsweise möglich, die Charakteristik und Empfindlichkeit des Sensors in einem weiten Bereich optimal an die Detektierbarkeit von Zylindern anzupassen.

Nach einer weiteren bevorzugten Ausführungsform der Erfindung ist das Basisteil von dem Sensor bereichsweise umgriffen. Der Sensor und das Basisteil sind dabei so ausgebildet, daß der Sensor bei in der Verankerungsnut angeordnetem Basisteil an dieses angesetzt werden kann, ohne daß die Befestigung des Basisteils in der Verankerungsnut gelöst werden muß. Durch das Umgreifen wird eine besonders stabile Verbindung zwischen dem Basisteil und dem Sensor erzielt.

Weitere vorteilhafte Ausführungsformen sind in den Unteransprüchen angegeben.

Die Erfindung wird nachfolgend anhand eines Ausführungsbeispieles, unter Bezugnahme auf die Zeichnung näher beschrieben.
- Figur 1: zeigt zwei perspektivische Ansichten eines Sensors mit dem erfindungsgemäßen Befestigungssystem.
- Figur 2: zeigt eine Darstellung des in einer Verankerungsnut verankerten Sensors.
- Figur 3: zeigt vier typische Zustände, die auftreten, während des Einsetzens des erfindungsgemäßen Befestigungssystems in eine Verankerungsnut.
- Figur 4: zeigt zwei weitere perspektivische Ansichten eines Sensors mit einem erfindungsgemäßen Befestigungssystem ähnlich dem in Figur 1.
- Figur 5: zeigt eine Darstellung des in einer Verankerungsnut verankerten Sensors gemäß Figur 4.
- Figur 6: zeigt eine perspektivische Ansicht einer weiteren Ausführungsform der Erfindung.
- Figur 7: zeigt eine andere perspektivische Ansicht der Ausführungsform nach Figur 6.
- Figur 8: zeigt drei typische Zustände, die während des Austauschens eines Sensors mit dem Befestigungssystem nach Figur 6 auftreten.

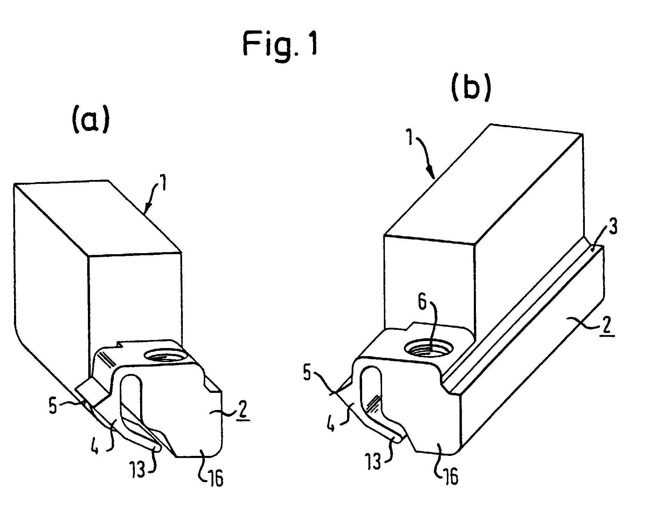

Die Figur 1 zeigt einen Sensor 1 sowie ein Befestigungssystem 2 mit dessen Hilfe der Sensor in einer nicht dargestellten Verankerungsnut befestigt wird. Das Befestigungssystem 2 umfaßt ein Basisteil 16, das bei dem gezeigten Ausführungsbeispiel mit dem Sensor 1 einstückig ausgebildet ist.

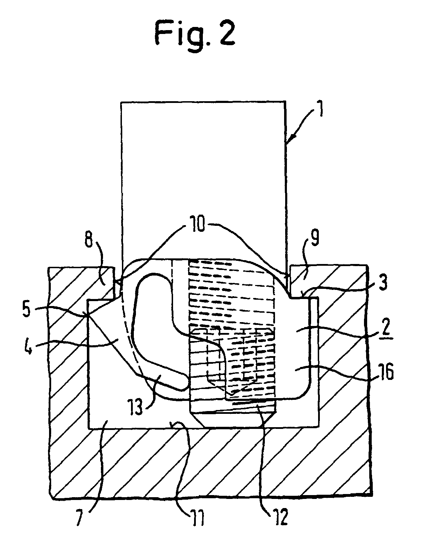

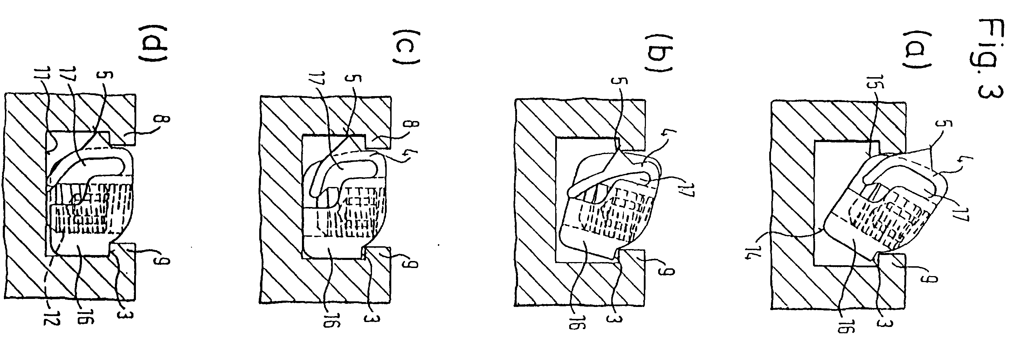

Gemäß Figur 1b ist an dem Basisteil 16 eine durchgehende feste Schulter 3, welche sich über die Länge des Befestigungssystems 2 erstreckt, ausgebildet. Auf der gegenüberliegenden Seite des Basisteils 16 ist ein Schnapphaken 4 vorgesehen, welcher mit einer Rastkante 5 ausgestattet ist. Zwischen der festen Schulter 3 und dem Schnapphaken 4 ist eine Gewindeöffnung 6 zur Aufnahme einer hier nicht dargestellten Klemmschraube 12 (siehe Fig. 2 und 3) angeordnet.

Figur 2 zeigt den in eine Verankerungsnut 7 verankerten Sensor 1 mit dem dazugehörigen Befestigungssystem 2. Die Öffnung der Verankerungsnut 7 wird durch die beiden Nut-Schultern 8 und 9 gebildet. Zwischen den Nut-Schultern 8 und 9 befindet sich der Nuthals 10. Auf den Verankerungsnut-Boden 11 drückt die Klemmschraube 12 und bewirkt damit, daß die feste Schulter 3 gegen die Nut-Schulter 9 gedrückt wird.

Die Rastkante 5 am Schnapphaken 4 greift unter die Nut-Schulter 8. Der Schnapphaken 4 hat am offenen Ende eine Federzunge 13, welche im hier dargestellten fixierten Zustand an der Klemmschraube 12 anliegt, wodurch eine Bewegung des Schnapphakens ausgeschlossen ist.

Die Figuren 3a bis 3d zeigen die Zustände, wie sie auftreten, wenn das Befestigungssystem 2 in die Verankerungsnut eingesetzt wird.

Figur 3a zeigt, daß das Basisteil 16 durch den Nuthals hindurch so eingekippt wird, daß die feste Schulter unter die Nut-Schulter 9 eingreift. Durch die konstruktive Gestaltung des Schnapphakens 4 mit der Rastkante 5 kann aufgrund des vorhandenen Federweges beim Eindrücken in die Verankerungsnut, wie in Figur 3b dargestellt, der Schnapphaken in Richtung der Mittenachse in einen Freiraum 17 ausweichen und seine Freigabestellung einnehmen. Damit das Einsetzen des Basisteils 16 in die Verankerungsnut 7 ermöglicht werden kann, ist die bodenseitige Kontur des Basisteils 16 abgerundet ausgebildet. D. h. durch die Rundungen 14 und 15 ist sichergestellt, daß das Basisteil 16durch den Nuthals 10 der Verankerungsnut 7 eingeführt und in erforderlicher Weise verschwenkt werden kann.

In Figur 3c ist der Sensor so weit eingeführt, daß die Rastkante 5 vom Schnapphaken 4 unter der Nut-Schulter 8 eingerastet ist. In diesem Zustand, der Raststellung des Schnapphakens 4, kann das Basisteil 16 und damit der Sensor 1 längs der Verankerungsnut beliebig verschoben und justiert werden. Während in den Figuren 3a bis 3c die Klemmschraube 12 sich noch in der oberen Stellung befindet und damit den Federweg des Schnapphakens 4 freigibt, ist in der Figur 3d die Klemmschraube 12 in Richtung des Verankerungsnut-Bodens 11 gedreht und drückt damit die feste Schulter 3 gegen die Nut-Schulter 9 sowie die Rastkante 5 gegen die Nut-Schulter 8. Ebenfalls verhindert die Klemmschraube in dem in der Figur 3d dargestellten Zustand, daß der Schnapphaken den ursprünglichen Federweg beschreiben kann.

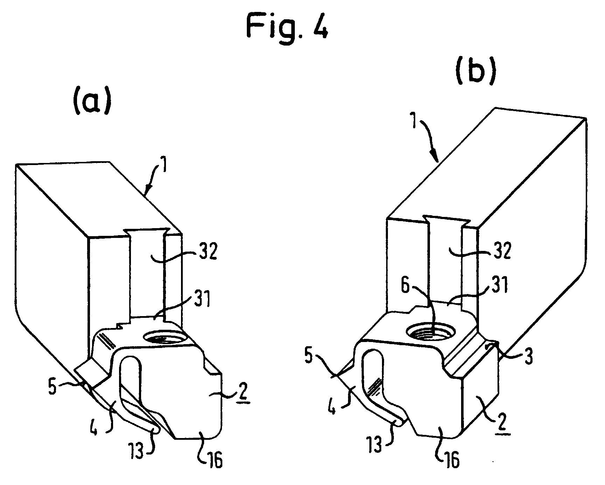

Die Figur 4 zeigt einen Sensor 1 sowie eine Befestigungssystem 2, die ähnlich dem Ausführungsbeispiel gemäß Figur 1 ausgebildet sind. In Figur 4 ist jedoch das Basisteil 16 nicht einstückig mit dem Sensor 1 ausgebildet, sondern das Basisteil 16 weist an einer Seite einen schwalbenschwanzförmigen Ansatz 31 auf, der in eine komplementär dazu an einer Seite des Sensors 1 ausgebildete Führungsnut 32 eingeschoben ist. Über den Ansatz 31 und die Führungsnut 32 ist das separat ausgebildete Basisteil 16 mit dem Sensor 1 verbunden, wobei zur Fixierung in Längsrichtung der Führungsnut 32 das Basisteil 16 und der Sensor 1 beispielsweise mit einer geeigneten Schraub-, Klemm- oder Rastverbindung miteinander gekoppelt sein können.

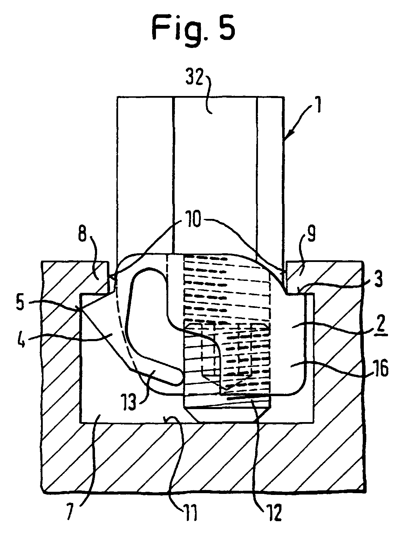

Gemäß Figur 4b ist an dem Basisteil 16 eine durchgehende feste Schulter 3, welche sich über die Länge des Befestigungssystems 2 erstreckt, ausgebildet. Auf der gegenüberliegenden Seite des Basisteils 16 ist ein Schnapphaken 4 vorgesehen, welcher mit einer Rastkante 5 ausgestattet ist. Zwischen der festen Schulter 3 und dem Schnapphaken 4 ist eine Gewindeöffnung 6 zur Aufnahme einer hier nicht dargestellten Klemmschraube 12 (siehe Fig. 3 und 5) angeordnet.

Figur 5 zeigt den in eine Verankerungsnut 7 verankerten Sensor 1 mit dem dazugehörigen Befestigungssystem 2, wobei im Gegensatz zu dem in Figur 2 dargestellten einstückigen Ausführungsbeispiel die Führungsnut 32 an dem separat ausgebildeten Sensor 1 zu erkennen ist.

Bei einer separaten Ausbildung des Basisteils 16 und des Sensors 1 kann wie in den Figuren 3a bis 3d das Basisteil 16 zunächst allein oder gleich zusammen mit dem an dem Basisteil 16 befestigten Sensor 1 in die Verankerungsnut 7 eingesetzt werden.

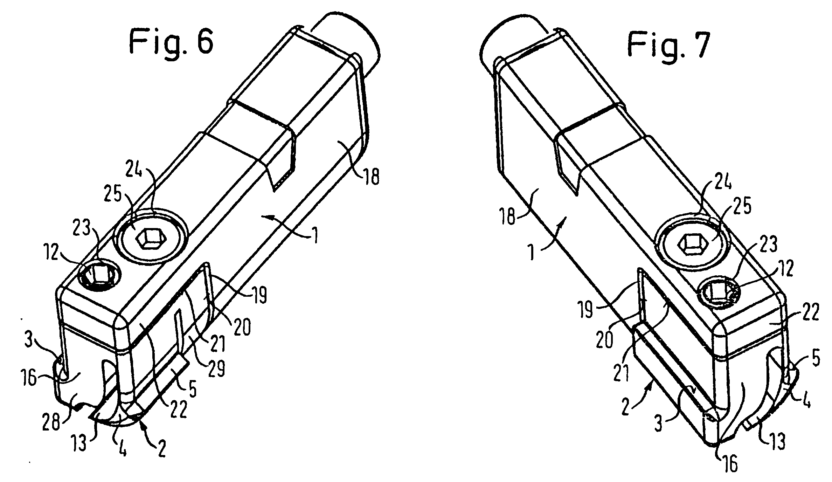

In den Figuren 6 bis 8 ist ein weiteres Ausführungsbeispiel der Erfindung dargestellt, bei dem der Sensor 1 und das Basisteil 16 miteinander verschraubt sind. Elemente, die den in den Fig. 1 bis 5 dargestellten Elementen entsprechen, sind dabei mit den gleichen Bezugszeichen versehen, wie in den Fig. 1 bis 5.

Der Sensor 1 besitzt ein langgestreckt ausgebildetes Gehäuse 18, an dessen einem Ende eine stufenförmige Ausnehmung 19 vorgesehen ist. Die Ausnehmung 19 wird durch zwei senkrecht aufeinander stehenden Flächen 20, 21 des Gehäuses 18 begrenzt und schließt formschlüssig das Basisteil 16 ein.

Das dem Basisteil 16 zugewandte Ende des Sensorgehäuses ist dabei als langgestreckter Ansatz 22 ausgebildet, der sich entlang der Oberfläche des Basisteils 16 erstreckt und zwei Öffnungen 23, 24 zur Aufnahme der Klemmschraube 12 sowie einer Verbindungsschraube 25 enthält.

Die Klemmschraube 12 wird durch die Öffnung 23 hindurch in die in den Fig. 6 und 7 nicht sichtbare Gewindeöffnung 6 im Basisteil 16 eingeschraubt, so daß der Schnapphaken 4 in seiner Verriegelungsposition fixiert werden kann, wie es zu den Fig. 1 bis 5 beschrieben ist.

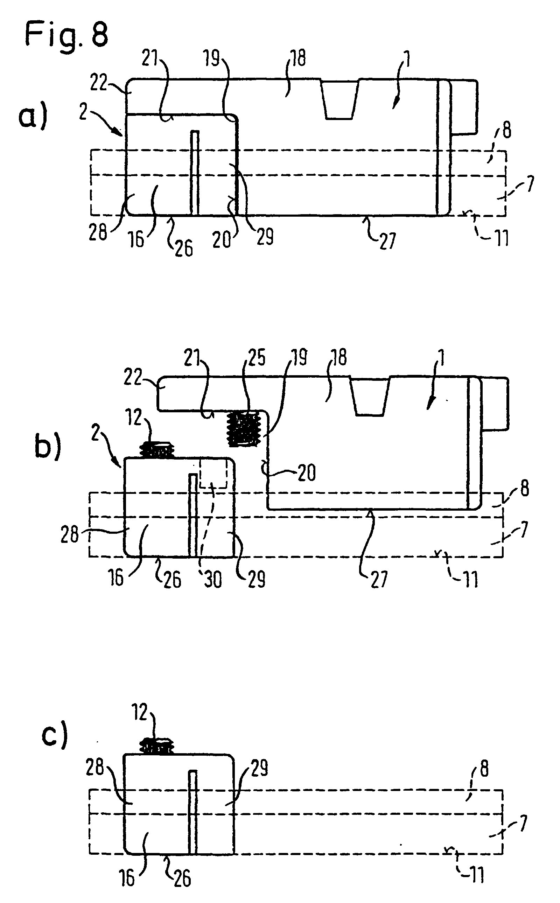

Durch die Verbindungsschraube 25 ist das Gehäuse 18 des Sensors 1 mit dem Basisteil 16 fest verbunden, so daß im verschraubten Zustand der Sensor 1 und das Basisteil 16 eine Einheit bilden und wie zur Fig. 3 beschrieben in eine Verankerungsnut eingesetzt werden kann. Zur Verbindung ist an der Oberseite des Basisteils 16 eine Gewindebohrung 30 (Fig. 8b) ausgebildet.

Fig. 8a) zeigt den Sensor 1 mit dem Basisteil 16, wie sie in der Verankerungsnut 7 eingesetzt sind. Die Verankerungsnut 7 ist dabei mit der Nutschulter 8 und dem Verankerungsnutboden 11 gestrichelt dargestellt. In dem eingesetzten Zustand sind die Unterseiten 26, 27 des Basisteils 16 und des Sensors 1 auf gleicher Höhe unmittelbar an dem Boden 11 der Verankerungsnut 7 angeordnet.

Zum Austauschen des Sensors 1 kann die in Fig. 8b) dargestellte Verbindungsschraube 25 gelöst werden, die in der in Fig. 8a) gezeigten Stellung mit dem Basisteil 16 verschraubt ist. Nach Lösen der Verbindungsschraube 25 kann der Sensor 1 von dem Basisteil 16 abgenommen und aus der Verankerungsnut 7 entnommen werden, wie es in Fig. 8b) dargestellt ist.

Nach Abnehmen des Sensors 1 verbleibt lediglich das Basisteil 16 in der Verankerungsnut 7, wie es in Fig. 8c) dargestellt ist.

In umgekehrter Reihenfolge kann der Sensor 1 bzw. ein Austauschsensor wieder mit dem Basisteil 16 verbunden werden. Dadurch, daß das Basisteil 16 nach Abnahme des Sensors 1 in seiner fixierten Stellung innerhalb der Verankerungsnut 7 verbleibt, ist nach Aufsetzen und Verschrauben des neuen Sensors dieser automatisch in der richtigen Position festgelegt. Ein erneute Justierung des Sensors ist somit nicht erforderlich.

Die Klemmschraube 12 ist bevorzugt als Madenschrauben ausgebildet, da sie sich auf diese Weise vollständig durch die Öffnung 23 in das Basisteil 16 hinein schrauben läßt. Die Verbindungsschraube 25 kann hingegen beispielsweise als Senkkopf- oder als Zylinderschraube ausgebildet sein, um die Verbindung zwischen dem Gehäuse 18 des Sensors 1 und dem Basisteil 16 zu ermöglichen.

Grundsätzlich ist anstelle einer Schraubverbindung zwischen dem Sensor 1 und dem Basisteil 16 auch eine andere, insbesondere lösbar Verbindungsart möglich. Beispielsweise können Sensorgehäuse 18 und Basisteil 16 miteinander verrastet oder durch eine Steckverbindung miteinander verbunden sein.

### Bezugszeichenliste

- (1): Sensor
- (2): Befestigungssystem
- (3): Feste Schulter
- (4): Schnapphaken
- (5): Rastkante
- (6): Gewindeöffnung
- (7): Verankerungsnut
- (8): Nut-Schulter
- (9): Nut-Schulter
- (10): Nuthals
- (11): Verankerungsnut-Boden
- (12): Klemmschraube
- (13): Federzunge
- (14): Rundungen
- (15): Rundungen
- (16): Basisteil
- (17): Freiraum
- (18): Sensorgehäuse
- (19): Ausnehmung
- (20): Fläche
- (21): Fläche
- (22): Ansatz
- (23): Öffnung
- (24): Öffnung
- (25): Verbindungsschraube
- (26): Unterseite des Basisteils
- (27): Unterseite des Sensors
- (28): Festlegungsabschnitt
- (29): Befestigungsabschnitt
- (30): Gewindebohrung
- (31): Ansatz
- (32): Führungsnut

## Patentansprüche

1. Befestigungssystem zur lösbaren Verankerung von Sensoren (1) in einer Verankerungsnut (7), die im Bereich des Nuthalses (10) durch zwei Nutschultern (8, 9) begrenzt wird, mit einem durch den Nuthals (10) in die Verankerungsnut (7) einsetzbaren, mit dem Sensor verbundenen Basisteil (16),
**dadurch gekennzeichnet,**
daß das Basisteil (16) eine feste Schulter (3) aufweist, welche bei in die Verankerungsnut (7) eingesetztem Basisteil (16) hinter eine der Nutschultern (9) eingreift, daß an der der festen Schulter (3) gegenüberliegenden Seite des Basisteils (16) mindestens ein von einer Freigabestellung in eine Raststellung verstellbarer Schnapphaken (4) mit einer Federzunge (13) und einer Rastkante (5) vorgesehen ist, welche in der Raststellung des Schnapphakens (4) bei in die Verankerungsnut (7) eingesetztem Basisteil (16) hinter die andere Nutschulter (8) eingreift, und daß zur Fixierung des Basisteils (16) in der Verankerungsnut (7) eine Klemmschraube (12) vorgesehen ist, welche das Basisteil (16) in der Verankerungsnut (7) fixiert und dabei eine Bewegung des Schnapphakens (4) von der Raststellung in die Freigabestellung verhindert.

2. Befestigungssystem nach Anspruch 1,
**dadurch gekennzeichnet,**
daß an beiden Enden des Basisteils ein Schnapphaken mit Klemmschraube vorgesehen ist und/oder daß die Federzunge (13) des Schnapphaken (4) so geformt ist, daß beim Einsetzen des Basisteils (16) in die Verankerungsnut (7) zumindest ein Teil des Schnapphakens (4), insbesondere die Rastkante (5) in Richtung der festen Schulter (3) ausweicht.

3. Befestigungssystem nach einem der vorhergehenden Ansprüche,
**dadurch gekennzeichnet,**
daß die unter die Nutschulter (8) greifenden Fläche der Rastkante (5) als Auflaufschräge ausgebildet ist, so daß der Sensor (1) bzw. das Basisteil (16) bei gelöster Klemmschraube (12) aus der Verankerungsnut (7) entfernt werden kann und/oder daß das Befestigungssystem und das Sensorgehäuse als einstückiges Kunststoffspritzteil ausgeführt ist.

4. Befestigungssystem nach einem der vorhergehenden Ansprüche,
**dadurch gekennzeichnet,**
daß die feste Schulter (3) jeweils nur gegenüber dem/den Schnapphaken (13) angeordnet ist und/oder daß das Basisteil (16) in der Verankerungsnut (7) dadurch fixierbar ist, daß durch die Klemmschraube (12) sowohl der Schnapphaken (4), insbesondere die Rastkante (5), über die Federzunge (13) gegen die Nutschulter (8) als auch die feste Schulter (3) gegen die gegenüberliegende Nutschulter (9) gepreßt wird.

5. Befestigungssystem nach einem der vorhergehenden Ansprüche,
**dadurch gekennzeichnet,**
daß das Basisteil (16) längs der Verankerungsnut (7) verschiebbar ist und/oder daß sich die feste Schulter (3) im wesentlichen über die gesamte Länge des Basisteils (16) erstreckt.

6. Befestigungssystem nach einem der vorhergehenden Ansprüche,
**dadurch gekennzeichnet,**
daß das Basisteil (16) und der Sensor (1) als separate Teile ausgebildet sind und der Sensor (1) insbesondere lösbar an dem Basisteil (16) befestigt ist, insbesondere daß das Basisteil (16) und der Sensor (1) miteinander verschraubt sind.

7. Befestigungssystem nach Anspruch 6,
**dadurch gekennzeichnet,**
daß bei an dem Basisteil (16) befestigtem Sensor (1) die beim Einsetzen zum Boden (11) der Verankerungsnut (7) hin zeigenden Unterseiten (26, 27) des Sensors (1) und des Basisteils (16) im wesentlichen in gleicher Höhe angeordnet sind.

8. Befestigungssystem nach Anspruch 6 oder 7,
**dadurch gekennzeichnet,**
daß das Basisteil (16) von dem Sensor (1) bereichsweise umgriffen ist, insbesondere daß in dem Gehäuse (18) des Sensors (1) eine Ausnehnung (19) insbesondere in Form einer Stufe ausgebildet ist, durch die zwei Kontaktflächen (20, 21) für das Basisteil (16) gebildet werden.

9. Befestigungssystem nach Anspruch 8,
**dadurch gekennzeichnet,**
daß die Kontaktflächen (20, 21) im wesentlichen senkrecht zueinander angeordnet sind, insbesondere daß eine der Kontaktflächen (21) parallel und die andere Kontaktfläche (20) senkrecht zur Längserstreckung des Sensors (1) verläuft.

10. Befestigungssystem nach einem der Ansprüche 6 bis 9,
**dadurch gekennzeichnet,**
daß das Basisteil (16) einen den Schnapphaken (4) umfassenden Festlegungsabschnitt (28) sowie einen starren Befestigungsabschnitt (29) umfaßt und daß an dem Befestigungsabschnitt (29) Befestigungsmittel, insbesondere in Form eines Gewindeelements (30), zur Befestigung des Sensors (1) an dem Basisteil (16) vorgesehen sind.

11. Befestigungssystem nach einem Ansprüche 6 bis 10,
**dadurch gekennzeichnet,**
daß in Verlängerung der an dem Basisteil (16) ausgebildeten festen Schulter (3) an dem Gehäuse (18) des Sensors (1) eine weitere feste Schulter ausgebildet ist und/oder daß das Basisteil (16) und/oder das Gehäuse (18) des Sensors (1) aus Kunststoff ausgebildet sind.
